Europäisches Patentamt

European Patent Office

Office européen des brevets

(19)

(11) Veröffentlichungsnummer: **0 025 412**
**B1**

(12) **EUROPÄISCHE PATENTSCHRIFT**

(45) Veröffentlichungstag der Patentschrift:
12.01.83

(21) Anmeldenummer: 80810272.7

(22) Anmeldetag: 02.09.80

(51) Int. Cl.³: **E 04 B 1/94, B 32 B 15/08,
B 32 B 5/18**

(54) Schwer brennbare Verbundplatte.

(30) Priorität: 07.09.79 CH 8087/79

(43) Veröffentlichungstag der Anmeldung:
18.03.81 Patentblatt 81/11

(45) Bekanntmachung des Hinweises auf die Patenterteilung:
12.01.83 Patentblatt 83/2

(84) Benannte Vertragsstaaten:
AT BE CH DE FR GB IT LI NL SE

(56) Entgegenhaltungen:
DE-A-1 807 225
DE-A-1 947 517
DE-A-2 149 678
DE-A-2 433 724
US-A-3 686 067

Die Akte enthält technische Angaben, die nach dem
Eingang der Anmeldung eingereicht wurden und die
nicht in dieser Patentschrift enthalten sind.

(73) Patentinhaber: Schweizerische Aluminium AG,
CH-8212 Neuhausen am Rheinfall (CH)

(72) Erfinder: Severus, Harald, Tobelweg 6,
CH-8200 Schaffhausen (CH)

ACTORUM AG

## Schwer brennbare Verbundplatte

Die Erfindung betrifft eine schwer brennbare Verbundplatte aus einer geschäumten Kernschicht aus Hart-PVC sowie auf diese Kernschicht aufgeklebten metallischen Deckblechen.

Die bekannten Verbundplatten der vorbezeichneten Art lassen sich im wesentlichen in zwei Gruppen unterteilen:

Bei der ersten Gruppe besteht eine zumeist verwendete Kunststoff-Kernschicht aus kompakten thermoplastischen Kunststoffen in Dicken von 0,2–10 mm. Beiderseits der Kernschicht sind meistens metallische Deckschichten in der Form von Folien oder Blechen, welche 0,1 bis 2,0 mm dick sind, angebracht. Derartige Verbundplatten sind relativ leicht und steif und können durch spanlose Formgebung plastisch umgeformt werden, beispielsweise durch Biegen in Schwenkbiegebänken oder durch Tiefziehen in Pressen.

Bei solchen Umformungen werden die metallischen Deckschichten über die Streckgrenze (0,2% Dehngrenze) hinaus verformt, ohne dass ein Knittern der Deckschichten oder eine Trennung der festen Verbindung zwischen Metall und thermoplastischem Kunststoff eintritt.

Für derartige Verbundplatten sind im wesentlichen folgende Eigenschaften besonders wichtig:

a) die hohe spezifische Steifigkeit (E · J/g) Elastizitätsmodul der metallischen Deckschicht mal Trägheitsmoment der Deckschicht geteilt durch das spezifische Gewicht oder Gewicht pro m² des Verbundwerkstoffes.

b) die plastische (spanlose) Umformbarkeit, welche darauf beruht, dass die relativ leichte Kunststoff-Kernschicht genügend schubsteif ist, so dass die metallischen Deckschichten nicht einknicken oder knittern.

Bisher hafteten Verbundplatten der vorbeschriebenen Art, welche als Kunststoff-Kernschicht z.B. Polyolefine enthalten, jedoch der Nachteil eines ungünstigen Brandverhaltens an, welches in einer Klassifizierung nach DIN 4102 als «normal entflammbar» ausgedrückt wird, weshalb solche Verbundplatten in der Anwendung Beschränkungen unterworfen sind.

Bei der zweiten Gruppe von Verbundplatten mit einem analogen Schichtaufbau «Metall-Kunststoff-Metall» und mit Dicken zwischen 10 und 100 mm besteht die Kunststoffkernschicht aus einem verhältnismässig leichten Schaumstoff mit einem sehr geringen spezifischen Gewicht ≤ 0,2 g/cm³.

Derartige Produkte sind wohl auch leicht und steif, können jedoch nicht plastisch umgeformt werden, weil die Schaumstoff-Kernschicht infolge geringer Schubsteifigkeit den metallischen Deckschichten keine ausreichende Stützung verleiht und insbesondere die metallische Deckschicht des Druckgurtes bei Biegebeanspruchung einknickt oder knittert; darüberhinaus treten in der Schaumstoffkernschicht bei spanloser Umformung Schubbrüche auf, wodurch die Verbindung zwischen Deckschicht und Kern geschädigt wird.

Die DE-A-24 33 724 offenbart eine Verbundplatte aus einer geschäumten Kernschicht aus Hart-PVC sowie auf diese aufgeklebten metallischen Deckblechen.

Aus der DE-A-21 49 678 ist ein Zusatz von anorganischem Füllmaterial zu geschäumten Kunststoffen bekannt.

Ferner sind aus der US-A-3 686 067 schwer entflammbare Kunststoffschäume mit einem Zusatz von Antimontrioxid bekannt.

Angesichts dieser Gegebenheiten hat sich der Erfinder die Aufgabe gestellt, das Brandverhalten einer Verbundplatte der eingangs erwähnten Art speziell auch im Hinblick auf eine Verminderung der Dichte des Rauchs, der bei Verbundplatten mit einer Kernschicht aus PVC dann auftritt, wenn diese Feuer ausgesetzt sind, zu verbessern.

Erfindungsgemäss wird diese Aufgabe dadurch gelöst, dass die Kernschicht (2) als Füllstoff Antimontrioxid und Aluminiumhydroxid in einem Gewichtsverhältnis von 1:3 bis 1:5 enthält und die Gesamtmenge an Füllstoff 7 bis 20% bezogen auf die Menge des Hart-PVC beträgt.

Bevorzugt enthält die Kernschicht 13 Gewichtsteile Antimontrioxid und Aluminiumhydroxid in einem Gewichtsverhältnis von 3:10 und weist eine Dichte von 0,2 bis 1,2 g/cm³, insbesondere ca. 0,8 g/cm³, auf.

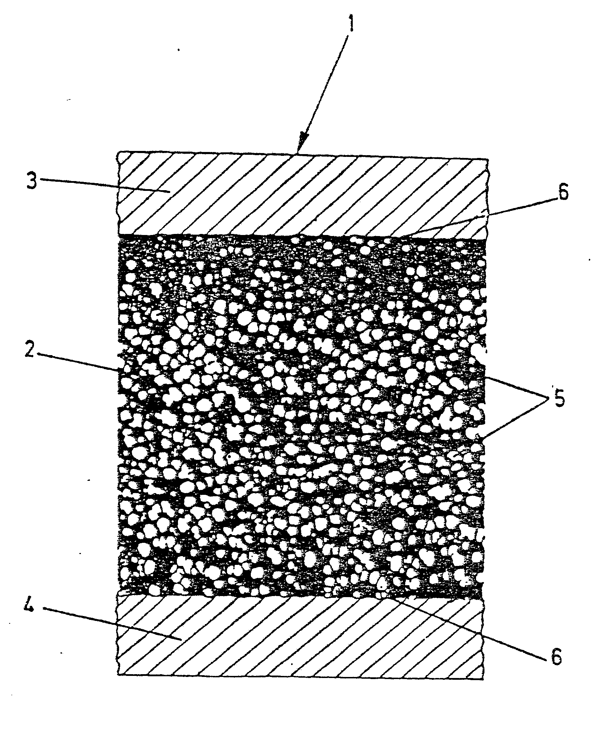

Die Erfindung wird nachstehend anhand der Zeichnung näher erläutert; diese zeigt in ihrer einzigen Figur eine fotografische Aufnahme einer Schnittfläche durch eine erfindungsgemässe Verbundplatte.

Eine Verbundplatte 1 mit einer geschäumten, gleichmässig verteilte Gasblasen 5 aufweisenden Kernschicht 2 aus Hart-PVC einer bevorzugten Dicke von 0,1 bis 10 mm ist über eine Klebeschicht 6 beidseitig mit 0,1–2 mm dicken Deckblechen 3, 4 versehen. Die Kernschicht 2 enthält – in der Zeichnung nicht dargestellt – Antimontrioxid und Aluminiumhydroxid in einer Korngrösse von 0,2 bis 10 µm als Füllstoff.

Wie aus der Fig. ersichtlich, erscheinen die in dem Hart-PVC homogen verteilten Gasblasen 5 nicht in der Form von Vertiefungen an der Oberfläche der Kernschicht 2, sondern verbleiben stets unterhalb derselben. Diese Verteilung der Gasblasen wird durch intensive Kühlung der extrudierten Hart-PVC-Kernschicht mit nachfolgender Glättung erzielt. Die so erhaltene gleichmässige Oberfläche der geschäumten Kernschicht 2 ist von besonderer Bedeutung, da diese bei Auftragung der verhältnismässig dünnen Klebeschicht 6 von beispielsweise 15 µm eine gute Klebewirkung zwischen den metallischen Deckschichten 3, 4 und der Kernschicht 2 gewährleistet.

Bei einer kontinuierlichen Herstellung der Verbundplatte 1 wird die extrudierte und kalibrierte, mit Füllstoff versehene Kernschicht 2 aus geschäumtem Hart-PVC auf beiden Seiten mit der Klebeschicht 6 versehen und anschliessend beidseitig mit den Deckblechen verklebt.

Die erfindungsgemäss ausgebildete Verbundplatte weist ein besonders günstiges Brandverhalten im Vergleich zu den bisher bekannten Verbundplatten auf und ist bei Raumtemperatur verformbar.

**Patentansprüche**

1. Schwer brennbare Verbundplatte aus einer geschäumten Kernschicht aus Hart-PVC sowie auf diese Kernschicht aufgeklebten metallischen Deckblechen, dadurch gekennzeichnet, dass die Kernschicht (2) als Füllstoff Antimontrioxid und Aluminiumhydroxid in einem Gewichtsverhältnis von 1:3 bis 1:5 enthält und die Gesamtmenge an Füllstoff 7 bis 20% bezogen auf die Menge des Hart-PVC beträgt.

2. Verbundplatte nach Anspruch 1, dadurch gekennzeichnet, dass die Kernschicht (2) eine Dichte von 0,2 bis 1,2 g/cm$^3$ aufweist.

**Claims**

1. Hardly flammable composite panel of a foamed core layer of hard PVC and metal cladding sheets adhered on this core layer, characterised in that the core layer (2) contains as filler antimony trioxide and aluminium hydroxide in a weight ratio of 1:3 to 1:5 and the total amount of filler amounts to 7 to 20% related to the amount of the hard PVC.

2. Composite panel according to claim 1, characterised in that the core layer (2) has a density of 0.2 to 1.2 g/cm$^3$.

**Revendications**

1. Plaque stratifiée difficilement inflammable constituée d'une couche formant noyau, en PVC dur, à structure cellulaire, ainsi que de tôles métalliques de couverture collées sur cette couche noyau, caractérisée en ce que la couche noyau (2) contient comme charge de l'oxyde d'antimoine et de l'hydroxyde d'aluminium dans un rapport de 1:3 à 1:5 et que la quantité totale de matériau de charge atteint 7 à 20% rapporté à la quantité de PVC dur.

2. Plaque stratifiée selon la revendication 1, caractérisée en ce que la couche noyau (2) présente une densité de 0,2 à 1,2 g/cm$^3$.